# EUROPEAN PATENT APPLICATION

(11) **EP 1 400 697 A1**
(43) Date of publication of application: **24.03.2004**
(21) Application number: 03077920.1
(22) Date of filing: 16.09.2003
(51) Int. Cl.: F04D 13/02, F16D 27/00, F01P 5/12, F01P 7/08

(54) **Apparatus for controlling operating of the devices for recirculating and cooling a cooling fluid in engines**

(30) Priority: 23.09.2002 IT MI20022008
(71) Applicant: Baruffaldi S.p.A., 20097 San Donato Milanese, Milan (IT)
(72) Inventor: Boffelli, Piercarlo, Milano (IT)
(74) Representative: Raimondi, Margherita

(57) **Abstract**

Apparatus for controlling operation of the shaft (2) actuating devices for recirculating (1) and cooling (V) a cooling fluid in an engine, in particular for vehicles and like, comprising means (3,3b) for generating the movement of said shaft (2) and means for transmitting the movement from the said generating means (3,3b) to the shaft (2), in which said movement transmission means comprise fixed electromagnetic means (22), a rotor (30;130;230) integral with the movement generating means (3,3b) and an armature (50;250) rotationally integral with the fluid cooling means (40,4;140,4;240,4,1240,4), between said armature (50;250) and said cooling means (40,4;140,4;240,4,1240,4) there being arranged a resilient element (43) able to allow a movement of the said armature (50;250) in the axial direction.

## Description

The present invention relates to an apparatus for controlling operation of the shaft actuating the means for recirculating and cooling a cooling fluid in heat engines in particular for vehicles and the like.

It is known in the sector for the production of vehicle engines that there exists the need to cool the said engines by means of recirculation of a cooling fluid which is moved by means of a corresponding recirculating pump, the impeller of which is actuated by a shaft in turn moved by a pulley connected to the driving shaft by means of an associated drive belt. It is also known that recirculation of the cooling fluid must be performed with a throughput corresponding to the actual cooling requirement determined by the existing working conditions and by the external temperature in order to avoid the constant and unnecessary operation of devices which use working power, thereby increasing the consumption of the vehicle; in addition to this, it is required that the fluid, in addition to being recirculated, should also be cooled by means of a fan which, rotating in synchronism with the pump, causes forced air to flow onto the fluid by means of the associated containing radiator.

The technical problem which is posed, therefore, is that of providing an apparatus for controlling operation of the shaft actuating the means for recirculating and cooling a cooling fluid in heat engines, in particular for vehicles and the like, which is able to allow control of activation and deactivation of said devices and a reduction in the overall dimensions of the rotating movement transmission parts.

These technical problems are solved according to the present invention by an apparatus for controlling operation the shaft which actuates devices for recirculating and cooling a cooling fluid in an engine, in particular for vehicles and like, comprising means for generating the movement of said shaft and means for transmitting the movement from the said generating means to the shaft, in which said movement transmission means comprise fixed electromagnetic means, a rotor integral with the movement generating means and an armature rotationally integral with the fluid cooling means, between said armature and said cooling means there being arranged a resilient element able to allow a movement of the said armature in the axial direction. Further characteristic features will emerge from the description given below of a non-limiting example of embodiment of the apparatus according to the invention provided with reference to the accompanying figures, in which:
- Figure 1 shows a schematic cross-sectional view, along an axial plane, of a first embodiment of the apparatus according to the present invention;
- Figures 2 shows a cross-sectional view, similar to that of Fig. 1, of a second example of embodiment of the apparatus according to the present invention;
- Figure 3 shows a cross-sectional view, similar to that of Fig. 1, of a third example of embodiment of the apparatus according to the present invention; and
- Figure 4 shows a cross-sectional view, similar to that of Fig. 1, of a variation of embodiment of the apparatus shown in Fig. 3; and
- Figure 5 shows a cross-sectional view, similar to that of Fig. 1, of a fourth embodiment of the apparatus according to the present invention.

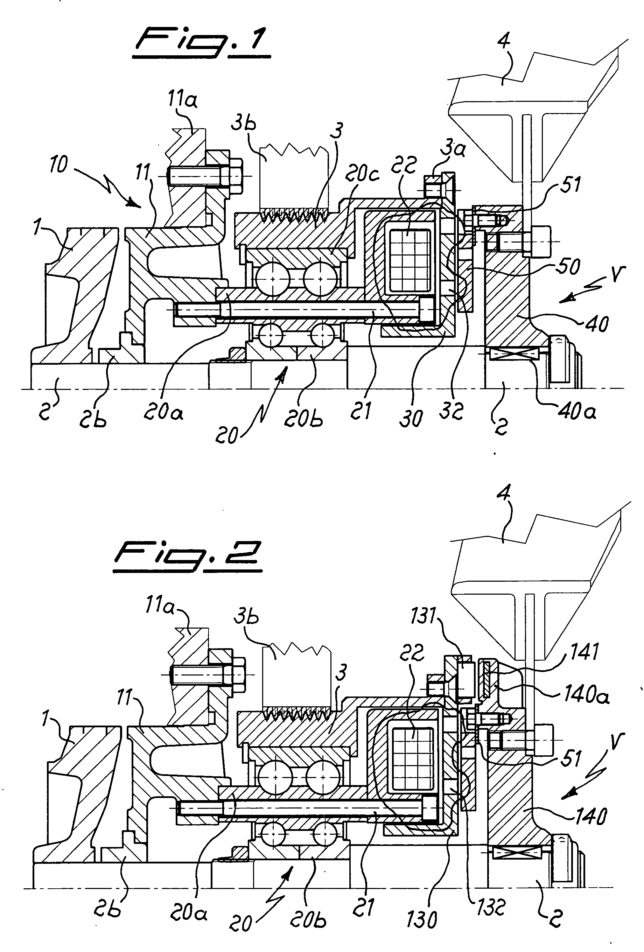

As illustrated in Fig. 1, the impeller 1 of a pump for recirculating the cooling fluid of heat engines for vehicles and the like is mounted at a first end of a shaft 2 supported by a fixed assembly 10 comprising the body 11 of the pump integral with the base 11a of the vehicle engine.

The pump body 11 has, integral therewith, a seal 2b, coaxial with the shaft 2, and the middle race 20a of a stepped bearing 20, on the inner race 20b of which the shaft 2 of the impeller 1 is keyed and the outer race 20c of which is integral with a pulley 3 for transmitting the movement to the device, in turn moved by a drive belt 3b.

In greater detail said middle race 20a is integrally joined to the pump body 11 by screw means 21 or the like also able to retain on the race itself an electromagnet 22, excitation of which can be remotely controlled by means of wires connected to a control unit (not shown).

The bearing 20 has dimensions of the races and balls increasing in the radial direction from the axis of rotation of the shaft 2 outwards.

The pulley 3 has a circumferential flange 3a which has, constrained thereto, a coaxial rotor 30.

The rotor 30 has eyelets 32 which interrupt the magnetic conductivity of the rotor so that the magnetic flux is concatenated as illustrated in Fig. 1.

A fan V is mounted at the end of the shaft 2 opposite to the impeller 1, said fan V comprising a disk 40 of conductive material constrained to the said shaft by means of a key 40a and supporting radial blades 4.

A coaxial armature 50, which is situated in a position facing the rotor 30 from which it is separated by a suitable air-gap, is constrained to the said support 40 with the arrangement of resilient means 51 in between.

The armature 50 also has in turn openings 52 which are arranged staggered with respect to those 32 of the rotor 30 so as to ensure more suitable closing of the magnetic flux lines.

Said resilient means 51 have characteristics such that the armature 50 is able to rotate together with the disk 40 and move in an axial direction with respect to the latter.

With this configuration the operating principle of the apparatus is as follows:
- during conditions where there is limited overheating of the fluid, the magnet 22 is not excited;
- the armature 50 is detached from the rotor 30 and consequently the shaft 2 is at a standstill, as are the impeller 1 of the pump and the blades 4 of the fan.

Should the temperature of the fluid increase, suitable sensors detect the variation thereof, causing:
- activation of the central control unit (not shown) and
- excitation of the electromagnet 22 which generates an electromagnet field able to attract the armature 50 so as to make contact with the rotor 30 against the recall action of the resilient membrane 51;
- in this way the disk 40 is made to rotate, causing rotation of the shaft 2 at a speed equal to that of the pulley 3; correspondingly, both the impeller 1 of the recirculating pump and the blades 4 of the cooling fan rotate at full speed.

Figure 2 shows a first variation of embodiment of the control apparatus according to the present invention. In this configuration the rotor 130 supports, on its outermost diameter, permanent magnets 131 arranged with an alternating North/South orientation, said magnets 131 being therefore movable rotationally with the rotor, but fixed in the axial direction with respect thereto.

The part of the rotor 130 carrying the magnets 131 also has interruptions 132 in the magnetic conductivity of the rotor so as to produce a suitable annular closure of the magnetic flux lines, as shown in Fig. 2.

Correspondingly, the disk 140 has a circumferential extension 140a on its outermost diameter where a ring 141 of magnetizable material is arranged, said ring being situated in a position substantially facing that of the magnets 131 from which it is separated by means of a suitable air-gap.

The operating principle of the apparatus in Figure 2 is as follows:
- the continuous rotation of the rotor 130 and therefore the magnets 131 causes the formation of parasitic (Foucault) currents with the formation of a corresponding magnetic field between the said magnets 131 and the ring 141 of the disk 140 which consequently starts rotating;
- since the engagement between rotor 130 and support 140 occurs without contact between the two parts, the support 140 tends to slip during rotation with respect to the rotor 130, thus resulting in rotation of the shaft 2 at a lower speed than that of the pulley 3;
- the impeller 1 of the pump and the fan 4 are therefore kept rotating slowly with corresponding limited continuous recirculation of the fluid and cooling thereof.

Should conditions of overheating of the fluid occur, detected by the corresponding sensors:
- the electromagnet 22 is excited, causing attraction of the armature 50 which is attracted to the rotor 130 against the recall action of the membrane 51;
- in these conditions, the support 140, the shaft 2 and the impeller 1 rotate at a speed the same as that of the pulley 3, resulting in both a high degree of recirculation of the fluid and high cooling thereof by the blades 4 of the fan.

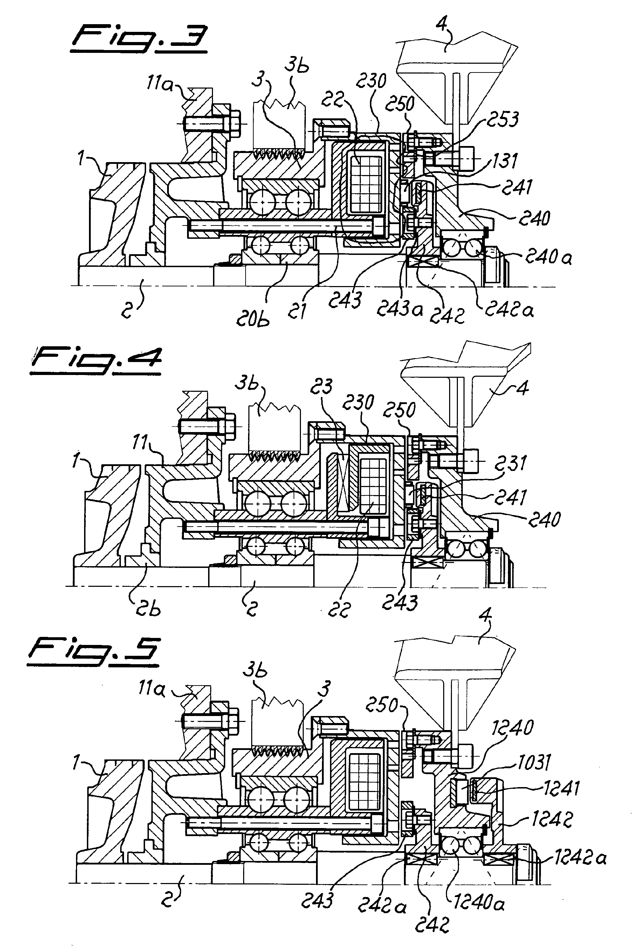

Fig. 3 shows a further example of embodiment of the control apparatus according to the present invention.

In this embodiment it is envisaged that the magnets 231 are arranged in a substantially central position (in the radial direction) of the rotor 230, said magnets being able to interact with a corresponding magnetizable element 241 mounted on a support 242 made of conductive material, arranged axially between the rotor 230 and the disk 240 of the fan and constrained to the shaft 2 by means of a key 242a.

The disk 240 of the fan V is in this case mounted on the shaft 2 by means of a bearing 240a so as to be idle with respect to the said shaft 2.

In a radial position closer to the axis of rotation than the magnetizable element 241, the support 242 also carries a ring 243 which is constrained to the said support by screw means with the arrangement of a resilient membrane 243a in between: in this way the ring 243 is constrained rotationally to the support 242, but is able to move axially with respect to the latter.

Coaxially with the said ring 243, the armature 250 is constrained to the disk 240 of the blades 4 with the arrangement, in between, of a resilient membrane 251 similar to that 243a of the ring 243.

With this configuration the operating principle is as follows:
- the impeller 1 of the pump is kept rotating constantly by means of coupling of the magnets 231 of the rotor 230 with the magnetizable ring 243 of the support 242: since the coupling action is of the type involving parasitic currents with relative slipping of the two parts, the shaft 2 is made to rotate at a speed which is lower than that of the rotor 230 and which can be determined during the design of the mechanical and magnetic features of the associated coupling circuit; the blades 4 of the fan are immobile.

If a greater recirculation of the fluid is required, it is possible to envisage two operating modes:
A) with reduction in the excitation of the electromagnet:
   a1) the electromagnet 22 is partially excited, thus recalling the ring 243 which, being displaced axially against the recall action of the resilient membrane 243a, is attracted to the rotor 230 and rotates together therewith, resulting in rotation of the shaft 2 at full speed corresponding to that of the rotor 230 or the pulley 3; consequently the impeller 1 of the pump rotates at full speed, while the blades 4 of the fan are still immobile;
   a2) in conditions where there is overheating of the cooling fluid, the electromagnet 22 is excited fully, thereby also axially recalling the armature 250 which, being attracted against the rotor 230, causes rotation of the disk 240 at full speed corresponding to that of the pulley 3: both the recirculating impeller 1 and the blades 4 of the fan therefore rotate at full speed;
B) without reduction of the excitation:
   - in this case and irrespective of the temperature of the fluid, the electromagnet 22 is excited fully, thereby recalling at the same time, in an axial direction, against the rotor 230, both the ring 243 and the armature 250, causing rotation, at full speed corresponding to that of the pulley 3, of both the recirculating impeller 1 and the blades 4 of the cooling fan V.

Fig. 5 shows an apparatus similar to that of Fig. 3 in which it is envisaged inserting a permanent magnet 23 opposite the electromagnet 22; by suitably designing the dimensions of the magnet 23, rotation of the impeller 1 of the recirculating pump at full speed is ensured also in the case of an electrical malfunction which does not allow activation of the electromagnet 22.

In this configuration, in fact, the magnet 23 constantly attracts both the disk 243 and the armature 250 against the rotor 230, causing rotation at full speed of the impeller 1 and the fan 4, exciting the electromagnet 22:
- at a first power level, the magnetic field produced by the magnet 22 is neutralised such as to cause separation of the ring 243 alone which is recalled by the resilient ring 243a and the consequent rotation of the impeller 1 of the pump at the lower speed determined by the magnets 231 acting on the ring 241;
- at full power, the magnetic field generated by the magnet 22 is neutralised entirely so as to cause separation of the armature 250 also from the rotor, thus causing stoppage in rotation of the blades 4 of the cooling fan.

Fig. 5 shows a fourth embodiment of the apparatus according to the present invention.

In this configuration it is envisaged providing a support 1242 which is arranged axially on the outside of the disk 240 of the blades 4 (with reference to the numbers in Fig. 4) and which supports the magnetizable ring 243.

The support 1242 is constrained to the shaft 2 by means of a key 1242a.

On its outermost diameter the support 1242 carries the magnetizable element 1241 which is situated facing permanent magnets 1031 mounted on the disk 1240 of the blades 4 of the fan; in a similar manner to Fig. 3, the disk 1240 is mounted on the shaft 2 by means of a bearing 1240a.

The support 242 is still arranged in a position axially situated between the rotor 230 and the disk 1240 and carries the ring 243 which is constrained by means of the resilient membrane 243a, while the disk 1240 supports in a similar manner the armature 1250.

In this configuration the operating principle is as follows:
- in normal conditions, the electromagnet 22 is not excited and consequently neither the ring 243 nor the armature 1250 are attracted to the rotor 230 and the shaft 2 is therefore at a standstill;
- in the event of overheating, the sensors activate the devices for excitation of the electromagnet 22 which attracts the ring 243, causing rotation of the shaft 2 at full speed and, therefore, the impeller 1 of the pump, the support 1242 and the magnetizable ring 1241;
- the rotation of the ring 1241 causes the formation of parasitic currents and therefore a field of attraction with the magnets 1031, consequently causing rotational driving of the disk 1240 with the associated blades 4 of the fan; since driving occurs without contact between the two parts, the disk 1240 tends to slip with respect to the support 1242, resulting in a lower speed of rotation of the blades 4 compared to the speed of the pulley 3;
- if necessary the electromagnet is excited further, causing recall also of the armature 250 which, being coupled with the rotor 230, causes a rotation of the blades 4 at a speed the same as that of the pulley 3; in this case both the impeller 1 of the pump and the fan rotate at full speed.

It is therefore obvious how the special configuration of the stepped bearing allows the radial dimensions of the pulley to be kept very compact, allowing the electromagnet to be arranged outside the axial dimensions of the said pulley.

In addition, the different dimensional design of the bearing in the radial direction and the fact that the middle race is integral with the fixed pump body allows the whole pulling load of the belt and the pulley to be transmitted onto the fixed part so that the impeller actuating shaft is not subject to external overloads with obvious advantages in terms of reliability and the possibility of reducing the associated dimensions.

## Claims

1. Apparatus for controlling operation of the shaft (2) actuating devices for recirculating (1) and cooling (V) a cooling fluid in an engine, in particular for vehicles and like, comprising means (3,3b) for generating the movement of said shaft (2) and means for transmitting the movement from the said generating means (3,3b) to the shaft (2), **characterized in that** said movement transmission means comprise fixed electromagnetic means (22), a rotor (30;130;230) integral with the movement generating means (3,3b) and an armature (50;250) rotationally integral with the fluid cooling means (40,4;140,4;240,4,1240,4), between said armature (50;250) and said cooling means (40,4;140,4;240,4,1240,4) there being arranged a resilient element (43) able to allow a movement of the said armature (50;250) in the axial direction.

2. Apparatus according to Claim 1, **characterized in that** said recirculating means (1) and said cooling means (40,4;140,4;240,4,1240,4) are mounted on the same actuating shaft (2).

3. Apparatus according to Claim 1, **characterized in that** said fluid cooling means (V) consist of a fan comprising a disk (40;140;240;1240) to which a plurality of radial blades (4) are constrained.

4. Apparatus according to Claim 1, **characterized in that** it comprises a stepped bearing (20) formed by a middle race (20a) integral with the fixed body (11) of the fluid recirculating means, an inner race (20b) supporting the shaft (2) of the impeller (1) of the recirculating means (11) and an outer race (20c) supporting the movement generating means (3,3b).

5. Apparatus according to Claim 3, **characterized in that** said stepped bearing (20) has dimensions of the rings and balls increasing in the radial direction from the axis of rotation of the shaft (2) outwards.

6. Apparatus according to Claim 1, **characterized in that** said movement generating means consist of a pulley (3) actuated by an associated drive belt (3b).

7. Apparatus according to Claim 1, **characterized in that** the electromagnet (22) of the clutch is integral with the fixed middle race (20a) of the stepped bearing (20) .

8. Apparatus according to Claim 1, **characterized in that** said electromagnet (22) can be activated remotely.

9. Apparatus according to Claim 1, **characterized in that** said fluid recirculating means (1) are rotationally constrained to the actuating shaft (2).

10. Apparatus according to Claim 9, **characterized in that** said fluid cooling means (40;140) are rotationally constrained to the actuating shaft (2).

11. Apparatus according to Claim 1, **characterized in that** magnetic means (131;231) are integrally joined to said rotor (30;130).

12. Apparatus according to Claim 11, **characterized in that** said magnetic means are permanent magnets (131;231).

13. Apparatus according to Claim 12, **characterized in that** said magnetic means (131;231) are able to co-operate with a corresponding magnetizable ring (141; 241) .

14. Apparatus according to Claim 13, **characterized in that** said magnetizable ring (141) is integral with the fluid cooling means (140,4).

15. Apparatus according to Claim 9, **characterized in that** said fluid cooling means (240;1240) are mounted on the actuating shaft (2) with the arrangement, in between, of a bearing (240a) so as to be idle with respect to the said shaft.

16. Apparatus according to Claim 15, **characterized in that** the rotor (230) has, integrally joined thereto, magnets (231) able to interact with corresponding magnetizable elements (241) mounted on a support (242) constrained to the shaft (2) by means of a key (242a).

17. Apparatus according to Claim 16, **characterized in that** said support (242) carries a ring (243) constrained to the said support by means of associated locking means and with the arrangement of a resilient membrane (243a) in between.

18. Apparatus according to Claim 15, **characterized in that** said fluid cooling means support magnets (1031) able to co-operate with a corresponding magnetizable element (1241).

19. Apparatus according to Claim 18, **characterized in that** said magnetizable element (1241) is mounted on an associated support (1242) rotationally integral with the actuating shaft (2) .

20. Apparatus according to Claim 19, **characterized in that** it comprises a support (242) arranged between the rotor (30) and the cooling means (240;1240), a ring (243) being constrained to said support with the arrangement of a resilient membrane (243a) in between.

21. Apparatus according to Claim 1, **characterized in that** it comprises at least one permanent magnet (23) arranged opposite the electromagnet (22).

22. System for recirculating and cooling a cooling fluid of a heat engine, in particular for vehicles and the like, comprising a shaft (2) which actuates the recirculating devices (1) and cooling devices (4), means (3,3b) for generating the movement of said shaft (2) and means for transmitting the movement from the said generating means (3,3b) to the shaft (2), **characterized in that** said movement transmission means comprise a fixed electromagnet (22), a rotor (30;130;230) integral with the movement generating means (3,3b) and an armature (50;250) rotationally integral with the fluid cooling means (40,4;140,4;240,4;1240,4), between said armature (50;250) and said cooling means (40,4;140,4;240,4;1240,4) there being arranged a resilient element (43) able to allow a movement of the said armature (50;250) in the axial direction.

23. System according to Claim 22, **characterized in that** said recirculating means (1) and said cooling means (40,4;140,4;240,4;1240,4) are mounted on the same actuating shaft (2) .

24. System according to Claim 22, **characterized in that** said fluid cooling means (V) consist of a fan comprising a disk (40;140;24;1240) to which a plurality of radial blades (4) are constrained.

25. System according to Claim 22, **characterized in that** it comprises a stepped bearing (20) formed by a middle race (20a) integral with the fixed body (11) of the fluid recirculating means, an inner race (20b) supporting the shaft (2) of the impeller (1) of the recirculating means (11) and an outer race (20c) supporting the movement generating means (3,3b).

26. Device according to Claim 25, **characterized in that** said stepped bearing (20) has dimensions of the rings and balls increasing in the radial direction from the axis of rotation of the shaft (2) outwards.

27. System according to Claim 22, **characterized in that** said movement generating means consist of a pulley (3) actuated by an associated drive belt (3b).

28. System according to Claim 22, **characterized in that** the electromagnet (22) of the clutch is integral with the fixed middle race (20a) of the stepped bearing (20) .

29. System according to Claim 22, **characterized in that** said electromagnet (22) can be activated remotely.

30. System according to Claim 22, **characterized in that** said fluid recirculating means (1) are rotationally constrained to the actuating shaft (2).

31. System according to Claim 30, **characterized in that** said fluid cooling means (40;140) are rotationally constrained to the actuating shaft (2).

32. System according to Claim 22, **characterized in that** magnetic means (131;231) are integrally joined to said rotor (30;130);

33. System according to Claim 32, **characterized in that** said magnetic means are permanent magnets (131;231).

34. System according to Claim 33, **characterized in that** said magnetic means (131;231) are able to co-operate with a corresponding magnetizable ring (141;241) .

35. System according to Claim 34, **characterized in that** said magnetizable ring (141) is integral with the fluid cooling means (140,4).

36. System according to Claim 30, **characterized in that** said fluid cooling means (240;1240) are mounted on the actuating shaft (2) with the arrangement of a bearing (240a) in between so as to be idle with respect to the said shaft.

37. System according to Claim 36, **characterized in that** the rotor (230) has, integrally joined thereto, magnets (231) able to interact with corresponding magnetizable elements (241) mounted on a support (242) constrained to the shaft (2) by means of a key (242a).

38. System according to Claim 37, **characterized in that** said support (242) carries a ring (243) constrained to the said support by means of associated locking means and with the arrangement of a resilient membrane (243a) in between.

39. System according to Claim 37, **characterized in that** said fluid cooling means support magnets (1031) able to co-operate with a corresponding magnetizable element (1241) .

40. System according to Claim 39, **characterized in that** said magnetizable element (1241) is mounted on an associated support (1242) rotationally integral with the actuating shaft (2).

41. System according to Claim 40, **characterized in that** it comprises a support (242) arranged between the rotor (30) and the cooling means (240;1240), a ring (243) being constrained to said support with the arrangement of a resilient membrane (243a) in between.

42. System according to Claim 22, **characterized in that** it comprises at least one permanent magnet (23) arranged opposite the electromagnet (22).
